Europäisches Patentamt

European Patent Office

Office européen des brevets

(11) Veröffentlichungsnummer: **0 495 236 A1**

# EUROPÄISCHE PATENTANMELDUNG

(21) Anmeldenummer: **91122051.5**

(22) Anmeldetag: **21.12.91**

(51) Int. Cl.⁵: **B65G 51/02**, A23L 3/22,
A23L 3/02, A23L 3/06

(30) Priorität: **12.01.91 DE 4100750**

(43) Veröffentlichungstag der Anmeldung:
**22.07.92 Patentblatt 92/30**

(84) Benannte Vertragsstaaten:
**AT BE CH DE DK FR GB IT LI LU NL SE**

(71) Anmelder: **Alfred Bolz GmbH & Co. KG
Isnyer Strasse 76
W-7988 Wangen/Allg.(DE)**

(72) Erfinder: **Wons, Joachim
Stephanusstrasse 4
W-7789 Argenbühl 1(DE)**
Erfinder: **Waldow, Helmut
August-Lämmle-Weg 35
W-7988 Wangen(DE)**

(74) Vertreter: **Knoblauch, Ulrich, Dr.-Ing. et al
Kühhornshofweg 10
W-6000 Frankfurt am Main 1(DE)**

(54) **Anlage zum Transport und zur Behandlung von einander gleichen Körpern.**

(57) Bei einer Anlage zum Transport und zur Behandlung von einander gleichen Körpern, insbesondere Behältnissen, ist einer Verschlußvorrichtung (5) und/oder einem Strahlapparat (9) eine Fangvorrichtung (6, 13) für rücklaufende Körper (1) nachgeschaltet. Hiermit lassen sich Probleme beheben, die andernfalls infolge des Rücklaufs der Körper auftreten.

Fig.1

EP 0 495 236 A1

Die Erfindung bezieht sich auf eine Anlage zum Transport und zur Behandlung von einander gleichen Körpern, insbesondere Behältnissen, in einem von einer Flüssigkeit durchströmten Kanal, der zwischen einer Eintragsstelle und einem mit Druckspeicher versehenen Separator ein bei Rückströmung schließendes Sperrorgan und mindestens einen Strahlapparat zum Druckaufbau aufweist.

Bei solchen Anlagen, wie sie aus EP-PS 139 780 bekannt sind, dient die Flüssigkeit, zumeist Wasser, sowohl zum Transport als auch zur Temperaturbehandlung der Körper. Weil mit Hilfe des Strahlapparats ein Druck aufgebaut wird, kann die Behandlung bei relativ hoher Temperatur erfolgen, die über der Verdampfungstemperatur bei atmosphärischem Druck liegt. Auf diese Weise können Lebensmittel pasteurisiert oder sterilisiert, Arzneimittel zur Reaktion gebracht, Kunststoffhalbzeug polymerisiert werden u. dgl. Als Behältnisse kommen entweder die Endverpackungen, wie Dosen, Aluminium- oder Kunststoffpackungen, oder spezielle Aufnahmebehälter, wie Kartuschen oder Kassetten, in Betracht.

Wenn der Strahlapparat versagt, kann heiße Flüssigkeit unter dem Einfluß des Drucks des Druckspeichers rückwärts zum Eintragsabschnitt strömen, wo es zur plötzlichen Dampfbildung und damit zu einer Personengefährdung kommen kann. Aus diesem Grund ist nahe der Eintragsstelle ein bei Rückströmung schließendes Sperrorgan vorgesehen. Dieses hat die Form einer von der rücklaufenden Flüssigkeit zu betätigenden Rückschlagklappe, die außerhalb des Rohrquerschnitts in einer Rohrerweiterung untergebracht ist. Dieses Sperrorgan ist aber unwirksam, wenn es nicht dicht schließt.

Der Erfindung liegt die Aufgabe zugrunde, eine Anlage der eingangs beschriebenen Art anzugeben, bei der die mit einer Störung des Druckaufbaus verbundenen Probleme leichter lösbar sind.

Diese Aufgabe wird erfindungsgemäß dadurch gelöst, daß das Sperrorgan einer Verschlußvorrichtung und/oder dem Strahlapparat als Fangvorrichtung für rücklaufende Körper nachgeschaltet ist.

Dieser Vorschlag berücksichtigt, daß nicht nur Flüssigkeit, sondern auch Körper rückwärts laufen. Insbesondere schieben sich die vereinzelt aufgegebenen Körper beim Rücklauf bis zur Berührung aneinander zusammen, so daß sich sogenannte "Züge" ergeben, die sich nicht mehr in üblicher Weise handhaben lassen. Dabei können die Körper Schäden anrichten oder selbst beschädigt werden. Beides führt zu langwierigen Reparaturen und teuren Betriebsunterbrechungen.

Die der Verschlußvorrichtung nachgeschaltete Fangvorrichtung verhindert, daß ein rücklaufender Körper die Schließbewegung der Verschlußvorrichtung behindert oder, wenn es sich um einen durch eine Kraft angetriebenen Schieber handelt, selbst zerstört wird.

Die dem Strahlapparat nachgeschaltete Fangvorrichtung verhindert, daß sich rücklaufende Körper im Strahlapparat eng aneinanderlegen, was den Druckaufbau bei einer späteren Inbetriebnahme des Strahlapparates verhindert.

Eine besonders einfache Ausführungsform ergibt sich, wenn die Fangvorrichtung eine Rückschlagklappe aufweist, die in ihrer Ruhestellung in den Kanalquerschnitt ragt und vom rücklaufenden Körper in eine Sperrstellung verlagert wird.

Hierbei empfiehlt es sich, daß die Rückschlagklappe an einem Schwenkarm angebracht ist, dessen Schwenkachse außerhalb des Kanalquerschnitts liegt. Durch die außenliegende Schwenkachse erzeugt der rücklaufende Körper auf jeden Fall ein Drehmoment, das die Rückschlagklappe in die Sperrstellung schwenkt.

Günstig ist es hierbei, daß die Rückschlagklappe in der Sperrstellung - ausgehend von der Schwenkachse - eine Komponente in Vorlaufrichtung hat. Es genügen verhältnismäßig kleine Schwenkwinkel, um die Rückschlagklappe von der Ruhestellung in die Sperrstellung zu bringen. Außerdem öffnet die Rückschlagklappe leicht unter dem Einfluß vorlaufender Flüssigkeit oder Körper.

Vorzugsweise trägt der Schwenkarm auf der der Rückschlagklappe abgwandten Seite der Schwenkachse ein Ausgleichsgewicht. Durch entsprechende Justierung des Ausgleichsgewichts kann man die Ruhestellung der Rückschlagklappe festlegen.

In weiterer Ausgestaltung ist die Rückschlagklappe gelenkig am Schwenkarm befestigt. Diese zusätzliche Beweglichkeit erlaubt eine gute Anpassung der Klappe in den einzelnen Betriebszuständen und insbesondere eine Abdichtung in der Sperrstellung.

Mit Vorteil nimmt die Rückschlagklappe bei vorlaufenden Körpern eine Ausweichstellung ein, in der sie einen Ausschnitt in der Kanalwand füllt. Die Rückschlagklappe begrenzt daher den Kanalquerschnitt, so daß sich keine Behinderung der vorlaufenden Körper ergibt.

Bei einer Ausführungsform gibt es einen Anschlag, gegen den sich die Rückschlagklappe unter dem Einfluß der vorlaufenden Flüssigkeit und/oder Körper anlegt.

Bei einer anderen Ausführungsform ist eine Stellvorrichtung vorgesehen, die die Rückschlagklappe in der Ausweichstellung hält und aufgrund eines Fehlersignals zur Verlegung in die Ruhestellung freigibt. Diese Stellvorrichtung hält die Rückschlagklappe unabhängig von Flüssigkeit oder Körper in der Ausweichstellung.

Besondere Vorteile bietet es, daß die Fangvorrichtung in einem Kanalbogen angeordnet ist.

Wenn rücklaufende Körper einen "Zug" gebildet haben, führt der Bogen dazu, daß sich zwischen den Stirnflächen aufeinanderfolgender Körper ein Spalt öffnet. Dies gibt die Möglichkeit, daß die Rückschlagklappe in diesen Spalt eintritt und daher selbst dann der überwiegende Teil der rücklaufenden Körper noch zum Anhalten gebracht werden kann, wenn diese bereits einen "Zug" bilden.

Von Vorteil ist es ferner, daß die Umfangsfläche der Körper an den Enden Abschrägungen aufweist. Dies erlaubt es, daß die den Abschrägungen angepaßte Rückschlagklappe weiter in den Kanalquerschnitt hineinragt, was ein größeres Drehmoment zum Schließen der Rückschlagklappe ergibt.

Mit besonderem Vorteil ist die Verschlußvorrichtung ein kraftbetätigter Schieber. Solche Schieber lassen sich aufgrund eines Fehlersignals sicher und mit hoher Dichtwirkung schließen, können aber wegen der Betätigungskraft darunter befindliche Körper zerstören. Die nachgeschaltete Fangvorrichtung sorgt dafür, daß keine rücklaufenden Körper unter den Schieber geraten.

Ferner empfiehlt es sich, daß der Verschlußvorrichtung eine Stoppvorrichtung zum Anhalten der vorlaufenden Körper vorgeschaltet ist. Wird die Stoppvorrichtung rechtzeitig vor der Bewegungsumkehr der Körper betätigt, ist sichergestellt, daß sich im Umkehraugenblick kein Körper zwischen Verschlußvorrichtung und Fangvorrichtung befindet.

Die Erfindung wird nachstehend anhand in der Zeichnung dargestellter bevorzugter Ausführungsbeispiele näher erläutert. Es zeigen:

Fig. 1 eine schematische Darstellung der gesamten Anlage,

Fig. 2 einen Schnitt durch eine erste Ausführungsform einer erfindungsgemäßen Fangvorrichtung und

Fig. 3 einen Schnitt durch eine zweite Ausführungsform einer erfindungsgemäßen Fangvorrichtung.

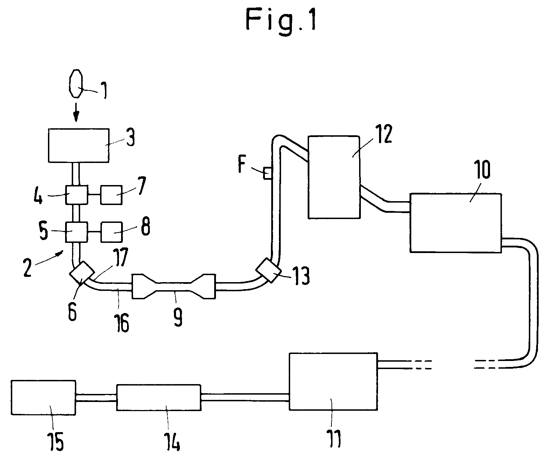

Fig. 1 zeigt schematisch eine Anlage zum Transport und zum Behandeln von einander gleichen Körpern 1, die hier als Kapseln ausgebildet sind, welche zu sterilisierende Kleinpackungen aufnehmen. Sie ist, wie in EP-PS 139 780 näher erläutert, überwiegend mit einer Transportflüssigkeit, wie Wasser, gefüllt. Die Anlage weist einen Anfangsabschnitt 2 mit einer Eintragsstelle 3, hier einem Eintragsbehälter, auf. Es folgt eine Stoppvorrichtung 4, mit der vorlaufende Körper 1 zunächst gebremst und dann angehalten werden können, während die Flüssigkeit weiterströmt (vgl. deutsche Patentanmeldung P 40 39 436.0). Dahinter befindet sich eine als Schieber ausgebildete Verschlußvorrichtung 5, mit der der Eingangsabschnitt sicher abgeschlossen werden kann, und eine Fangvorrichtung 6 zum Festhalten rücklaufender Körper 1. Die Stoppvorrichtung 4 besitzt eine Stellvorrichtung 7, die beim Auftreten eines Fehlersignals einen mechanischen Anschlag für die vorlaufenden Körper 1 teilweise in den Kanalquerschnitt schiebt. Die Verschlußvorrichtung 5 weist eine Verstellvorrichtung 8 auf, die beim Auftreten eines Abschaltsignals den Schieber unter Krafteinwirkung, beispielsweise durch eine Feder oder einen Stellmotor, in die Verschlußlage bringt. Es folgt ein Strahlapparat 9, der die Transportflüssigkeit antreibt und einen Druck im nachfolgenden Anlagenteil aufbaut. Der Eingangsabschnitt 2 ist von nachfolgenden Behandlungsabschnitten 10 und 11, in denen durch Verwendung einer entsprechend temperierten Transportflüssigkeit eine Temperaturbehandlung durchgeführt wird, durch einen mit einem Druckspeicher versehenen Separator 10 getrennt. Zwischen dem Strahlapparat 9 und dem Separator 12 gibt es eine weitere Fangvorrichtung 13. Zwischen den Behandlungsabschnitten 10 und 11 können noch weitere Separatoren und Behandlungsabschnitte angeordnet sein. Der Behandlungsabschnitt 11 ist über eine Drosselvorrichtung 14 zum Druckabbau mit einer Austragsstelle 15 verbunden.

Die Körper 1 durchlaufen in der Anlage einen als Rohr ausgebildeten Kanal 16 beziehungsweise entsprechende Führungen. Es gibt mehrere nicht eingezeichnete Flüssigkeitskreisläufe, durch die die Körper 1 mit unterschiedlicher Temperatur behandelt werden. In einem ersten Flüssigkeitskreislauf strömt die Flüssigkeit im Kanal 16 vom Eintragsbehälter 3 zum ersten Separator 12 und über eine nicht dargestellte Rückleitung wieder zurück. Zwischen aufeinanderfolgenden Separatoren verlaufen Abschnitte weiterer Flüssigkeitskreisläufe. Im ausgangsseitigen Flüssigkeitskreislauf strömt Flüssigkeit vom letzten Separator zum Austragsabschnitt 15. Statt des einen Strahlapparates 9 können auch mehrere solcher Strahlapparate hintereinandergeschaltet sein.

Wenn der Strahlapparat 9 ausfällt oder seine Leistung vermindert, wird die dahinterliegende Flüssigkeitssäule zusammen mit den darin enthaltenen Körpern, die insgesamt eine Masse von mehreren Tonnen haben können, durch den Druck des in dem mindestens einen Separator 12 enthaltenden Druckspeichers zunächst abgebremst und später rückwärts gedrückt. Hierbei muß auf jeden Fall verhindert werden, daß über 100°C heißes Wasser aus dem Eintragsbehälter 3 austritt und schlagartig verdampft, was Personenschäden nach sich ziehen kann. Zu diesem Zweck stellt ein Fühler F die Transportgeschwindigkeit der Körper 1 fest. Wird ein vorgegebener Wert unterschritten, spricht die Stoppvorrichtung 4 an, so daß der Weitertransport der Körper verhindert wird, die Transportflüssigkeit aber weiterströmt. Sollte dies nicht ausreichen, um die Anlage in den Normalbetrieb zurückzuführen, sinkt also die Transportgeschwindigkeit weiter, so wird - wegen der großen bewegten Masse erst nach einiger Zeit - die Flüssigkeitssäule mit den Körpern zum Stillstand kommen und dann langsam mit der Rückwärtsbewegung beginnen. Hierdurch werden die Fangvorrichtungen 6 und 13 geschlossen. Schließen sie flüssigkeitsdicht, ist die Gefahr gebannt. Schließen sie nur unvollkommen, werden aber zumindest die Körper am Rücklauf gehindert. Sollte es wegen unzureichenden Abschlusses der Fangvorrichtung notwendig sein, den einen dichten Abschluß garantierenden Schieber der Verschlußvorrichtung 5 zu betätigen, so besteht keine Gefahr, daß die Schließbewegung durch einen Körper behindert und dieser beschädigt wird. Denn da die Stoppvorrichtung 4 schon seit geraumer Zeit keine Körper mehr hindurchgelassen hat, ist der anschließende Kanalabschnitt frei von Körpern. Und die Fangvorrichtung 6 sorgt dafür, daß in diesen freien Bereich auch kein rücklaufender Körper gelangt.

Die Fangvorrichtung 13 hat die Aufgabe, einen Rücklauf der Körper in den Strahlapparat 9 zu verhindern. Daher können sie auch im Strahlapparat 9 keinen "Zug" bilden, der eine spätere Inbetriebnahme verhindert oder wesentlich erschwert.

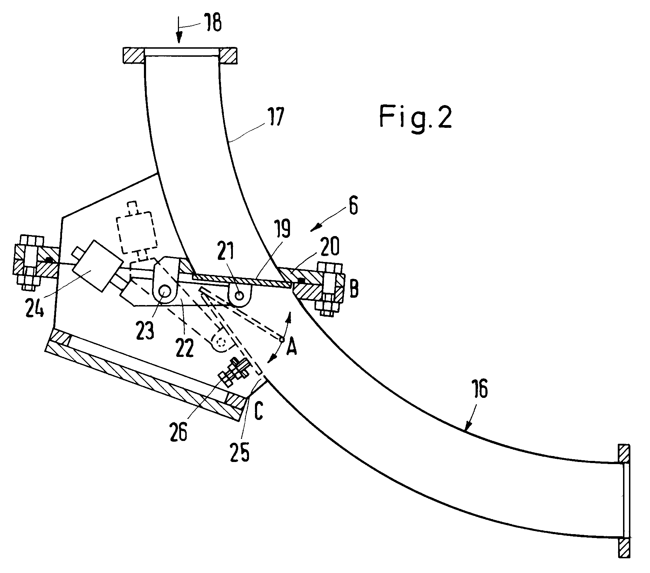

Der Aufbau einer solchen Fangvorrichtung ergibt sich aus Fig. 2. Im Bogen 17 des Kanals 16, durch den Flüssigkeit und Körper 1 normalerweise von oben in Richtung des Pfeiles 18 eintreten, befindet sich eine Rückschlagklappe 19, die in der Sperrstellung B gegen einen KLappensitz 20 anliegt. Die Rückschlagklappe 19 ist über ein Gelenk 21 an einem Schwenkarm 22 angebracht, der um eine gehäusefeste, im Abstand vom Kanalquerschnitt angeordnete Schwenkachse 23 drehbar ist. Am gegenüberliegenden Ende des Schwenkarms 22 ist ein Ausgleichsgewicht 24 angebracht, das verstellbar ist und Justierzwecken dient. Die Justierung erfolgt derart, daß die Rückschlagklappe 19 beim Fehlen äußerer Kräfte die Ruhestellung A einnimmt, in der sie in den Kanalquerschnitt ragt. Ein rücklaufender Körper 1 stößt mit seiner Stirnseite an die Rückschlagklappe, wodurch diese in die veranschaulichte Sperrstellung B gedrückt wird. Im Normalbetrieb wird die Rückschlagklappe 19 durch die vorlaufende Flüssigkeit und/oder die vorlaufenden Körper in die Ausweichstellung C geschwenkt, in der die Rückschlagklappe 19 einen Ausschnitt 25 der Kanalwandung füllt, wobei diese Ausweichstellung durch einen Anschlag 26 in der Form einer Einstellschraube festgelegt ist. Die Rückschlagklappe 19 hat eine größere Fläche als der Kanalquerschnitt. Sie liegt in der Sperrstellung B schräg zur Kanalmittellinie und erstreckt sich von der Schwenkachse 22 aus mit einer Komponente in Vorlaufrichtung. Wegen der gelenkigen Aufhängung der Rückschlagklappe 19 ist in der Sperrstellung B ein dichter Abschluß des Kanalquerschnitts möglich.

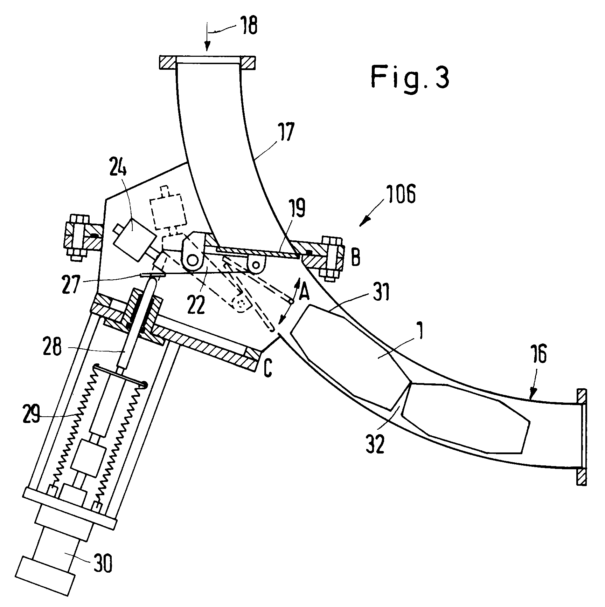

Bei der Fangvorrichtung 106 im Ausführungsbeispiel der Fig. 3 ist der Aufbau der Rückschlagklappe gleich demjenigen der Fig. 2. Um aber die Rückschlagklappe im Normalbetrieb sicher in der Ausweichstellung C zu halten, besitzt der Schwenkarm 22 einen Anschlag 27, auf den ein Stift 28 wirkt, der einerseits unter dem Einfluß von Federn 29 und andererseits unter dem Einfluß eines pneumatischen Zylinders 30 steht. Wird der Zylinder mit Druck beaufschlagt, geht die Rückschlagklappe 19 in die Ausweichstellung C. Fällt der Druck aufgrund eines Fehlersignals, das wiederum vom Fühler F ausgehen kann, weg, wird der Stift 28 durch die Feder 29 in die veranschaulichte Stellung zurückgezogen, und die Rückschlagklappe 19 geht in die Ruhestellung A.

In Fig. 3 sind zwei Körper 1 eingezeichnet, deren Umfang an den Enden Abschrägungen 31 aufweist. Wegen der Bogenform des Kanals 16 öffnet sich zwischen aufeinanderfolgenden Körpern 1, selbst wenn diese einander berühren, ein Spalt 32. Wegen dieses Spaltes und der Abschrägung 31 vermag die Rückschlagklappe 19 zwischen aufeinanderfolgende Körper 1 zu treten, selbst wenn diese im "Zug" rücklaufen.

Von den dargestellten Ausführungsbeispielen kann in vielfacher Hinsicht abgewichen werden, ohne den Grundgedanken der Erfindung zu verlassen. Die Fangvorrichtung kann auch in geraden Rohrabschnitten untergebracht werden. Statt des Ausgleichsgewichts 24 kann eine Feder zur Einstellung der Ruhestellung A verwendet werden.

**Patentansprüche**

1. Anlage zum Transport und zur Behandlung von einander gleichen Körpern, insbesondere Behältnissen, in einem von einer Flüssigkeit durchströmten Kanal, der zwischen einer Eintragsstelle und einem mit Druckspeicher versehenen Separator ein bei Rückströmung schließendes Sperrorgan und mindestens einen Strahlapparat zum Druckaufbau aufweist, dadurch gekennzeichnet, daß das Sperrorgan einer Verschlußvorrichtung (5) und/oder dem Strahlapparat (9) als Fangvorrichtung (6; 13, 13a; 106) für rücklaufende Körper (1) nachgeschaltet ist.

2. Anlage nach Anspruch 1, dadurch gekennzeichnet, daß die Fangvorrichtung (6, 106) eine Rückschlagklappe (19) aufweist, die in ihrer Ruhestellung (A) in den Kanalquerschnitt ragt und vom rücklaufenden Körper (1) in eine Sperrstellung (B) verlagert wird.

3. Anlage nach Anspruch 2, dadurch gekennzeichnet, daß die Rückschlagklappe (19) an einem Schwenkarm (22) angebracht ist, dessen Schwenkachse (23) außerhalb des Kanalquerschnitts liegt.

4. Anlage nach Anspruch 2 oder 3, dadurch gekennzeichnet, daß die Rückschlagklappe (19) in der Sperrstellung (B) - ausgehend von der Schwenkachse (23) - eine Komponente in Vorlaufrichtung hat.

5. Anlage nach einem der Ansprüche 2 bis 4, dadurch gekennzeichnet, daß der Schwenkarm (22) auf der der Rückschlagklappe (19) abgewandten Seite der Schwenkachse (23) ein Ausgleichsgewicht (24) trägt.

6. Anlage nach einem der Ansprüche 2 bis 5, dadurch gekennzeichnet, daß die Rückschlagklappe (19) gelenkig am Schwenkarm (22) befestigt ist.

7. Anlage nach einem der Ansprüche 2 bis 6, dadurch gekennzeichnet, daß die Rückschlagklappe (19) bei vorlaufenden Körpern (1) eine Ausweichstellung (C) einnimmt, in der sie einen Ausschnitt in der Kanalwand füllt.

8. Anlage nach Anspruch 7, gekennzeichnet durch einen Anschlag (26), gegen den sich die Rückschlagklappe (19) unter dem Einfluß der vorlaufenden Flüssigkeit und/oder Körper (1) anlegt.

9. Anlage nach Anspruch 7, gekennzeichnet durch eine Stellvorrichtung (27 bis 30), die die Rückschlagklappe (19) in der Ausweichstellung (C) hält und aufgrund eines Fehlersignals zur Verlegung in die Ruhestellung freigibt.

10. Anlage nach einem der Ansprüche 1 bis 9, dadurch gekennzeichnet, daß die Fangvorrichtung (6; 106) in einem Kanalbogen (17) angeordnet ist.

11. Anlage nach einem der Ansprüche 1 bis 10, dadurch gekennzeichnet, daß die Umfangsfläche der Körper (1) an den Enden Abschrägungen (31) aufweist.

12. Anlage nach einem der Ansprüche 1 bis 11, dadurch gekenzeichnet, daß die Verschlußvorrichtung (5) ein kraftbetätigter Schieber ist.

13. Anlage nach einem der Ansprüche 1 bis 12, dadurch gekennzeichnet, daß der Verschlußvorrichtung (5) eine Stoppvorrichtung (4) zum Anhalten der vorlaufenden Körper (1) vorgeschaltet ist.

# Fig.1

Fig.2

Fig.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | US-A-2 760 873 (E. MUNZ)<br>* Spalte 1, Zeile 52 - Spalte 2, Zeile 17;<br>Abbildung 2 *<br>--- | 1 | B65G51/02<br>A23L3/22<br>A23L3/02<br>A23L3/06 |
| A | FR-A-2 506 734 (NEUWEILER AG)<br>* Seite 11, Zeile 32 - Seite 12, Zeile 34;<br>Abbildung 8 *<br><br>----- | 1 | |

**RECHERCHIERTE SACHGEBIETE (Int. Cl.5 )**

B65G
A23L

Der vorliegende Recherchenbericht wurde für alle Patentansprüche erstellt

| Recherchenort | Abschlußdatum der Recherche | Prüfer |
|---|---|---|
| DEN HAAG | 16 APRIL 1992 | VAN ROLLEGHEM F. |